# FASCICULE DE BREVET EUROPEEN

(11) **EP 2 409 957 B1**
(45) Date de publication et mention de la délivrance du brevet: **11.09.2013**
(21) Numéro de dépôt: 11290318.2
(22) Date de dépôt: 08.07.2011
(51) Int. Cl.: C02F 11/16, F26B 3/28, F26B 9/08, F26B 25/04

(54) **Installation de traitement de boues comprenant des paires d'aubes**
Schlammbehandlungsanlage mit Schaufelparen
Sludge treatment installation comprising pairs of shovels

(30) Priorité: 22.07.2010 FR 1003079
(43) Date de publication de la demande: 25.01.2012
(73) Titulaire: Aqualter Développement, 28000 Chartres (FR)
(72) Inventeur: Darcel, Loïc, 78000 Versailles (FR)
(74) Mandataire: Plaçais, Jean Yves

(56) Documents cités:
- EP-A1- 1 621 522
- DE-U1-202006 011 052
- FR-A1- 2 637 968
- FR-A1- 2 930 175
- GB-A- 977 701
- GB-A- 2 039 351
- US-A- 3 613 893
- LUBOSCHIK U: "Solar sludge drying - based on the IST process", RENEWABLE ENERGY, PERGAMON PRESS, OXFORD, GB, vol. 16, no. 1-4, 4 janvier 1999 (1999-01-04), pages 785-788, XP004138114, ISSN: 0960-1481, DOI: DOI:10.1016/S0960-1481(98)00281-X

## Description

L'invention se rapporte à une installation de traitement de boues, notamment pour le séchage de celles-ci.

Beaucoup d'opérations industrielles ou urbaines génèrent des déchets qu'il s'agit de soumettre à des traitements variés de finalités diverses. On peut citer comme exemple les déchets provenant de stations d'épuration d'eaux résiduaires industrielles ou urbaines ou d'usines de traitement d'eau potable. Ces déchets comprennent notamment des masses formées par des boues biologiques et physico-chimiques.

Il s'agit de soumettre ce type de déchets à des traitements plus ou moins complexes, de finalité économique et/ou écologique. De plus, certaines législations fixent des normes précises et impératives pour le traitement desdits déchets.

Tout ceci fait que le traitement de déchets est aujourd'hui à la fois répandu et diversifié.

La partie « boues » des déchets est un secteur sensible parmi les déchets à traiter. Ainsi, le traitement des boues en vue de leur valorisation comprend classiquement l'épaississement, la déshydratation et le cas échéant le séchage sur certaines installations.

Le séchage de boues apparaît comme une étape importante puisqu'elle permet notamment de réduire considérablement les volumes des boues. Un faible volume est important au niveau du stockage, du transport et/ou de l'évacuation.

On connait notamment des installations dites à séchage thermique, lesquelles mettent en oeuvre une opération de séchage par air dans un circuit fermé comprenant une évacuation pour humidité. Cependant, ce type d'opération de séchage est soumis à des contraintes techniques qui en font une opération coûteuse et complexe. De plus, ce type d'installation entraîne une grande consommation en énergie pouvant dépasser 1000 kWh par tonne d'eau évaporée.

On connait également des installations à séchage solaire. Le séchage solaire de boues apparaît comme intéressant puisqu'il permet la réduction des volumes des boues à des coûts d'investissement et d'exploitation nettement plus attractifs que ceux du séchage thermique.

Il faut noter que les installations de séchage solaire de boues sont de taille généralement importante avec un appareillage volumineux et encombrant classiquement implanté dans un bâtiment de type serre. Tout dysfonctionnement abaisse donc fortement le rendement de l'installation et risque, par ailleurs de créer de fortes nuisances pour l'environnement immédiat de l'installation notamment des nuisances olfactives liées à la fermentation non maîtrisée des boues. Or on vise aujourd'hui un fonctionnement en continu, et le plus automatisé possible.

Pour permettre une automatisation des installations de séchage, il faut veiller à un grand nombre de paramètres pour éviter des problèmes qui peuvent aller du déraillement d'éléments mobiles jusqu'à la saturation en humidité de l'air.

A côté de cela, le bilan énergétique augmente avec la complexité du processus mis en oeuvre. Il est donc important de trouver un équilibre entre une mise en oeuvre la plus simple possible et un bilan énergétique satisfaisant, tout en tenant compte des réglementations imposées.

Afin d'optimiser la mise en oeuvre ou encore en vue d'économiser de l'énergie, l'état de la technique propose différentes installations et/ou procédés de séchage.

Le document WO 2004/020922 A1 décrit un dispositif de retournement de boues. Afin d'éviter une ventilation forcée et positionnée en toiture de la serre, le dispositif comprend des ventilateurs entraînés sur un châssis qui sont directement positionnés sur des moyens assurant le retournement de boues. Les ventilateurs assurent le renouvellement de l'air contenu dans la serre.

Le document DE 43 15 321 A1 décrit une installation utilisant la combinaison d'une toiture transparente avec une ventillation poussée pour le séchage de boues. L'installation utilise l'énergie solaire pour accélérer le séchage.

Le document EP 0 413 940 A décrit une installation comprenant un dispositif de pressage pour essorer des boues et ainsi améliorer le séchage.

DE-U1-20 2006 011 052 et EP-A-1 621 522 décrivent des installations ayant des aubes symétriques pour retourner des boues.

FR-A-2 637 968 et FR-A- 2 930 175 décrivent des installations de retournement et séchage d'une masse, lesdites installations étant équipées de deux moteurs.

Ces installations et/ou procédés connus ne sont toutefois pas adaptés à une mise en oeuvre totalement satisfaisante, propre à permettre une automatisation tout en économisant l'énergie.

La présente invention vient améliorer la situation.

À cet effet, l'invention vient introduire une installation de traitement de boues, du type comprenant un plancher allongé possédant une surface de travail pour recevoir une masse de boues étalées, des rails de guidage sensiblement parallèles disposés longitudinalement sur le plancher, de part et d'autre de la surface de travail, un système d'entraînement à chaîne disposé le long des rails de guidage, un chariot mobile disposé transversalement au-dessus de la surface de travail et comprenant au moins une roue dentée engrenée sur le système d'entraînement à chaîne et couplée à un premier arbre moteur pour un déplacement du chariot mobile en translation longitudinale au dessus du plancher le long des rails, le chariot portant un outil de retournement rotatif positionné transversalement, au contact de ladite masse de boues, dans laquelle l'outil de retournement est entraîné en rotation par un second arbre moteur indépendant du premier, et cet outil de retournement comprend des paires d'aubes demi-cylindriques fixées sensiblement symétriquement par l'un de leurs bords, de part et d'autre du second arbre moteur, les deux aubes de chaque paire étant asymétriques, du fait de rayons distincts, selon un écart au moins égal à 5% environ.

Selon un mode de réalisation, l'installation comprend des ventilateurs d'axe vertical montés à l'avant du chariot mobile, et un conduit d'acheminement qui part de la sortie des ventilateurs, et forme déflecteur directement vers lesdites aubes de l'outil de retournement.

Selon un autre mode de réalisation, le système d'entraînement à chaînes est disposé sensiblement horizontalement sur le plancher et parallèlement à chaque rail de guidage.

Selon un autre mode de réalisation, le système d'entraînement à chaînes comprend une chaîne d'avancement et une chaîne de guidage.

Selon un autre mode de réalisation, l'installation comprend un système de stabilisation disposé perpendiculairement à chaque rail de guidage.

Selon un autre mode de réalisation, l'installation comprend une poutre en combinaison avec une roue, laquelle vient en appui horizontalement contre chaque rail de guidage.

Selon un autre mode de réalisation, le plancher comprend un système de chauffage.

Selon un autre mode de réalisation, l'arbre entraîné comprend un tube'cylindrique dont l'épaisseur de tôle est environ égale 4 mm.

Selon un autre mode de réalisation, une des deux aubes a un rayon compris entre 150 mm et 220 mm.

Selon un autre mode de réalisation, une première aube a un rayon de d'environ 180 mm et une deuxième aube a un rayon de d'environ 210 mm.

Selon un autre mode de réalisation, le chariot mobile comprend un treillis de stabilisation formé par des barres d'armature.

D'autres avantages et caractéristiques de l'invention apparaîtront à la lecture de la description détaillée ci-après et sur les dessins annexés sur lesquels :
- la figure 1 représente un schéma général d'une installation de traitement de boues dans un bâtiment de type serre selon un mode de réalisation de l'invention,
- la figure 2 représente une vue de face d'une installation de traitement de boues selon un mode de réalisation de l'invention,
- la figure 3 représente une vue de dessus d'une installation de traitement de boues selon un mode de réalisation de l'invention,
- la figure 4 représente une vue latérale d'un chariot d'une installation de traitement de boues selon un mode de réalisation de l'invention,
- la figure 5 représente une vue de dessus d'une partie d'un système d'entraînement à chaines selon un mode de réalisation de l'invention,
- la figure 6 représente une vue de face d'un outil de retournement selon un mode de réalisation de l'invention,
- la figure 7 représente une vue latérale d'une installation de traitement de boues avec ventilateur et déflecteur selon un mode de réalisation de l'invention,
- la figure 8 représente une vue de face d'une paires d'aubes demi-cylindriques asymétriques selon un mode de réalisation de l'invention,
- la figure 9 représente une coupe selon un axe A-A de la paire d'aubes de la figure 8, et
- la figure 10 représente un système de stabilisation selon l'invention.

Les dessins et la description ci-après contiennent, pour l'essentiel, des éléments de caractère certain. Ils font partie intégrante de la description, et pourront donc non seulement servir à mieux faire comprendre la présente invention, mais aussi contribuer à sa définition, le cas échéant.

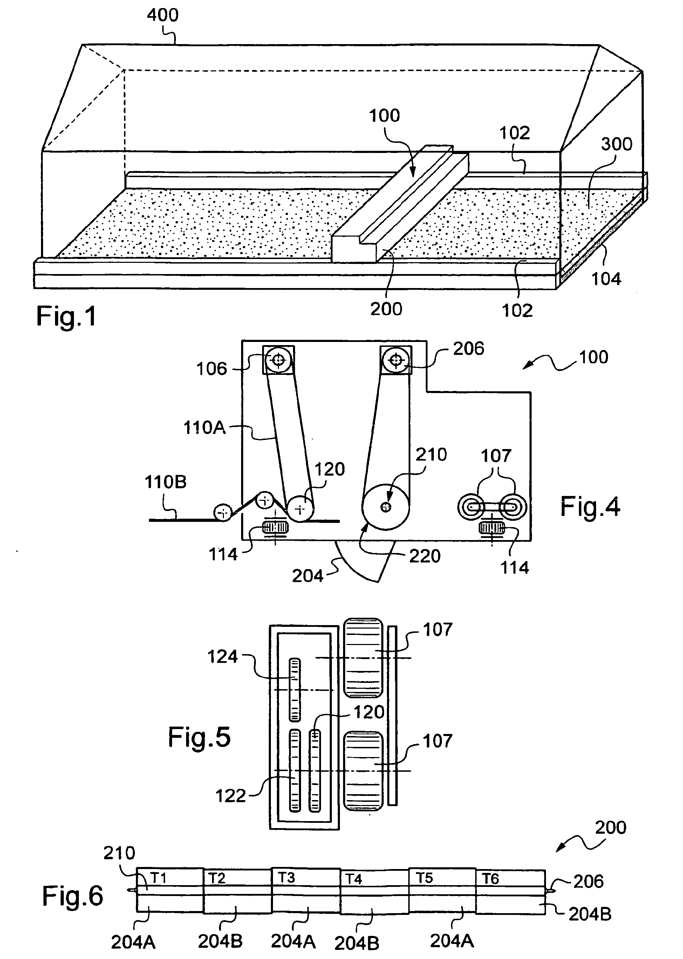

La figure 1 représente un schéma général d'une installation de traitement de boues située à l'intérieur d'un bâtiment 400 de type serre.

L'installation comprend un plancher 104 possédant une surface de travail pour recevoir une masse de boue 300 étalée. Par surface de travail il faut comprendre sensiblement la partie du plancher 104 formant un lit de boue 300. Il s'agit essentiellement d'une surface plane généralement rectangulaire agencée pour recevoir de la boue 300 en vue d'un séchage. La boue 300 peut être apportée par une vis d'alimentation.

Des rails de guidage 102 sont disposés sensiblement le long du plancher 104, à savoir parallèlement à celui-ci et parallèlement entre eux. D'un autre point de vue, les rails de guidage 102 sont disposés longitudinalement de part et d'autre de la surface de travail.

Un système d'entraînement à double chaîne (deux chaînes distinctes) disposé le long des rails de guidage (non représenté sur la figure 1) déplace un chariot mobile 100 au dessus de la surface de travail. Le chariot mobile 100 est disposé transversalement au-dessus de ladite surface de travail et est agencé pour réaliser une translation longitudinale au-dessus du plancher 104 en prenant appui sur les rails de guidage 102.

Le chariot mobile 100 porte un outil de retournement 200. L'outil de retournement 200 est donc positionné transversalement par rapport à la surface de travail du plancher 104.

L'outil de retournement 200 est agencé de manière à être au contact de la masse de boues 300 située sur la surface de travail. Plus précisément, l'outil de retournement 200 est rotatif et au quasi-contact du plancher afin d'assurer au mieux une fonction de retournement de boues. Toutefois, il faut prévoir un espace de sécurité entre l'outil de retournement 200 et le plancher 104 afin d'éviter un accrochage.

L'outil de retournement 200 étant porté pat le chariot 100, se déplace en translation longitudinale au-dessus du plancher 104. Ainsi, la masse de boues 300 se trouvant sur la surface de travail est sollicitée sur toute la longueur du plancher 104 par l'outil de retournement 200.

Le plancher 104 peut être de nature plus ou moins sophistiquée et peut notamment être de type plancher-chauffant.

Selon un mode de réalisation, le plancher comprend un système de chauffage avec recyclage de chaleur à partir des effluents de sortie.

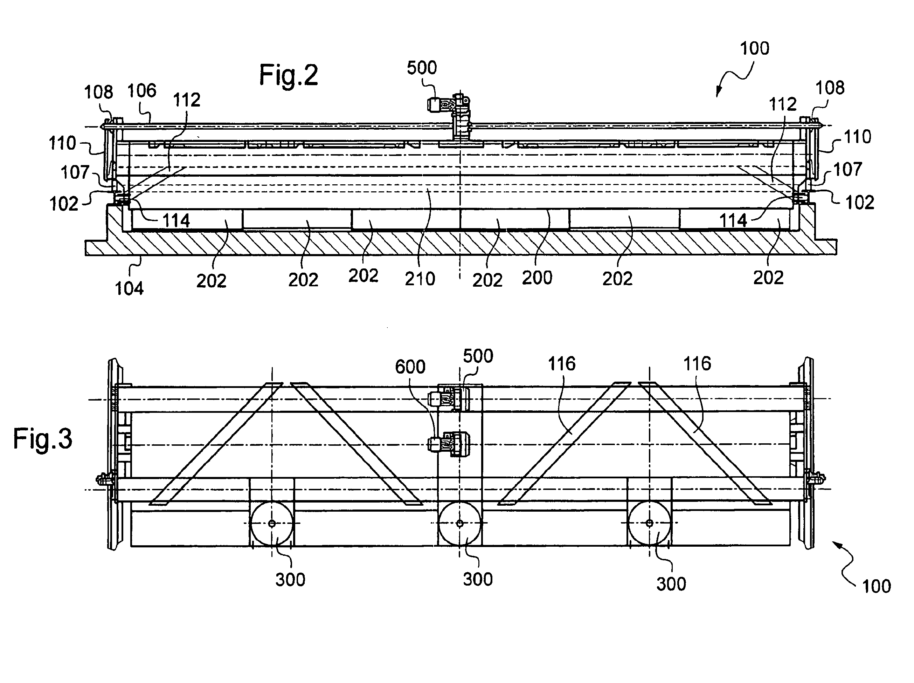

La figure 2 représente une vue de face d'un chariot 100. Le chariot comprend un premier arbre moteur 106 actionné par un premier moteur 500. L'arbre moteur 106 comprend en partie terminale au moins une roue dentée 108 laquelle est engrenée sur une chaîne 110A du système d'entraînement à chaînes 110. Une chaîne de guidage 110B du système d'entraînement à chaînes 110 est disposée le long des rails de guidage pour permettre ensemble avec la chaîne 110A un déplacement du chariot 100 en translation longitudinale.

Le chariot mobile 100 repose avec ses roues 107 sur les rails de guidage 102 afin de suivre l'entraînement motorisé au-dessus du plancher 104 par le système d'entraînement à chaînes 110.

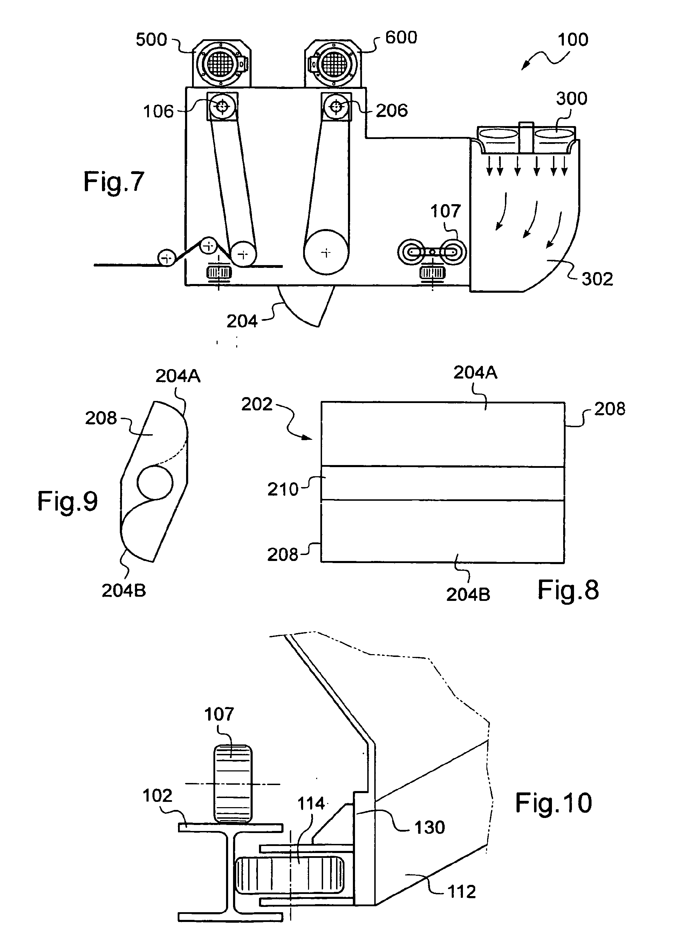

L'installation de traitement de boues de la figure 2 comprend au moins un système de stabilisation 118 qui est montré plus en détail sur la figure 10. Chaque système de stabilisation 118 est agencé perpendiculairement à chaque rail de guidage 102. Ledit système de stabilisation 118 comprend au moins une poutre 112 et une roue 114 assistées par un élément de support 130. L'élément de support 130 peut-être formé par un renforcement au niveau de la tôle extérieure du chariot 100 ou encore par une chape agencée sur ladite tôle, comme le montre la figure 10.

Le système de stabilisation 118 coopère avec le rail de guidage 102 en s'appuyant sur celui-ci. Plus précisément, la poutre 112 vient en appui horizontal contre chaque élément de support 130, notamment pour pallier les forces et contraintes qui surviennent avec le déplacement du chariot mobile 100 lors de la mise en marche de l'installation de traitement de boues. Préférentiellement, le système de stabilisation 118 comprend une roue 114 pour favoriser le guidage le long du rail de guidage 102 et ainsi éviter la "mise en crabe" du chariot mobile 100 ainsi que de minimiser les frottements entre le rail de guidage 102 et le système de stabilisation 118. Chaque roue 114 vient en appui horizontal contre chaque rail de guidage 102.

L'ensemble du système d'entraînement à chaînes 110, des rails de guidage 102, du système de stabilisation 118 et des poutres 112 confèrent à l'installation une grande stabilité lors du déplacement longitudinal au-dessus de la surface de travail. Ceci va de pair avec une économie d'énergie. Cet ensemble d'éléments permet aussi d'éviter la « mise en crabe » du chariot mobile 100.

Comme évoqué plus haut, le chariot 100 comprend un outil de retournement 200. Selon l'invention l'outil de retournement 200 est formé par un ensemble de paires d'aubes 202 fixés sur un arbre 210. Chaque paire d'aubes est asymétrique du fait de rayons distincts et chaque aube est fixée symétriquement par rapport à l'axe central dudit arbre.

Les paires d'aubes 202 sont demi-cylindriques et fixées sensiblement symétriquement par l'un de leur bord et de part et d'autre dudit arbre 210. Selon l'invention, chaque paire d'aubes 202 est asymétrique du fait de rayons distincts de chacune des aubes selon un écart au moins égal à 5% environ. On reviendra plus loin sur ce point.

L'arbre 210 est entraîné en rotation par un second arbre moteur 206 indépendant du premier arbre moteur 106 à l'origine du déplacement du chariot mobile 100. L'installation comprend donc deux systèmes motorisés distincts avec deux moteurs distincts 500 et 600. Chaque moteur alimente donc un système de fonction très différente : L'un actionne un déplacement et l'autre une action directe sur de la boue.

La figure 3 montre une vue de dessus d'un chariot mobile 100. Il apparait sur la figure 3 les deux moteurs 500 et 600 distincts et indépendants l'un de l'autre. Chacun entraîne respectivement un arbre moteur : le premier moteur 500 entraîne un premier arbre moteur 106, le second moteur 600 entraîne un second arbre moteur 206.

Le chariot 100 comprend des ventilateurs 300 d'axe vertical. Les ventilateurs 300 sont montés à l'avant du chariot mobile 100. Un conduit d'acheminement qui part de la sortie des ventilateurs 300 forme déflecteur directement vers les paires d'aubes 202 de l'outil de retournement 200.

Le chariot mobile 100 comprend également des barres d'armature 116, lesquelles forment un treillis de stabilisation. Les barres d'armature 116 contribuent tout comme les poutres 112 à pallier les contraintes et forces survenant lors de l'actionnement de l'installation de traitement de boues.

La figure 4 représente une vue latérale du chariot mobile 100 de l'invention. Le premier arbre moteur 106 entraîne une roue dentée 120 par l'intermédiaire d'une chaîne 110A dite chaîne d'avancement. La figure 5 montre que la roue dentée 120 est disposée sur un même arbre qu'une seconde roue dentée 122. La roue dentée 122 est au contact d'une autre chaîne 110B, dite chaîne de guidage, disposée le long des rails de guidage 102. La roue dentée 122 coopère avec une roue dentée 124 par l'intermédiaire de la chaîne indépendante 110B.

L'ensemble des deux chaînes 110A et 110B forment partie intégrante du système d'entraînement à chaînes 110. Ce système d'entraînement à chaînes peut être qualifié de système d'entraînement à double chaîne (deux chaînes distinctes).

Les deux chaînes 110A et 110B sont indépendantes l'une de l'autre et autonomes dans leur fonction. En effet, tandis que la chaîne 110A est agencée pour contribuer à l'avancement du chariot 100, la chaîne 110B contribue essentiellement au guidage dudit chariot 100. Ceci permet une bonne maintenance.

En effet, le système d'entraînement à chaînes 110 est réalisé de sorte qu'une rupture de l'une quelconque des deux chaînes 110A ou 110B n'a pas d'incidence directe sur l'autre. Il faut noter qu'en pratique la chaîne 110B qui sert essentiellement au guidage se trouve nettement plus exposée à des ruptures que la chaîne 110A. Le remplacement d'une seule chaîne de type 110A ou 110B est relativement simple. De plus, l'avancement du chariot mobile 100 n'est pas affecté en cas de rupture de la chaîne 110B du fait de l'existence de la chaîne 110A qui assure l'avancement du chariot 100.

Il faut donc comprendre que la disposition générale le long des rails de guidage 102 du système d'entraînement à chaînes 110 est formée d'une part par la chaîne de guidage 110B agencée le long desdits rails 102 et d'autre part par la chaîne d'avancement 110A qui assure essentiellement un avancement du chariot mobile 100 le long des rails de guidage 102.

Les roues 107 sont agencées sur le rail de guidage afin de guider le chariot 100. Les roues 107 contribuent au soutien du poids du chariot mobile 100.

La figure 4 montre le second arbre moteur 206 lequel entraîne l'arbre entraîné 210. Les deux arbres interagissent par l'intermédiaire d'une chaîne en relation avec une roue dentée 220 agencée sur l'arbre entraîné 210. La figure 4 montre aussi une aube 204 fixée sur l'arbre entraîné 210 et formant une partie de l'outil de retournement 200.

La figure 6 montre plus en détail l'outil de retournement 200 selon l'invention. L'outil de retournement 200 est formé par un nombre pair de tronçons (T1 à T6 sur la figure 6) de paires d'aubes 202. Chaque paire d'aubes 202 est formée par deux aubes 204A et 204B. Naturellement, Le nombre de tronçon peut varier et notamment en fonction de la longueur du plancher.

Les deux aubes 204A et 204B sont chacune de forme demi-cylindrique et sont chacune fixée sensiblement symétriquement par l'un de leurs bords de part et d'autre de l'arbre entraîné 210.

Les deux aubes 204A et 204B de chaque paire d'aubes 202 sont asymétriques du fait de rayons distincts, selon un écart au moins égal à 5 % environ.

Pour éviter un balourd, les paires d'aubes 202 sont agencées, sur l'arbre entraîné 210, selon des tronçons où l'on alterne une aube longue et une aube courte, dans le sens longitudinal. Autrement dit, une paire d'aubes et la suivante sont inversées à 180° l'une par rapport à l'autre dans un plan central, et ceci sur toute la longueur de l'outil de retournement 200. Lors de l'actionnement de l'outil de retournement 200, l'asymétrie entre les deux aubes 204A et 204B assure un gain d'énergie substantiel.

Pour diminuer encore la dépense d'énergie, l'installation de traitement de boues peut-être munie de ventilateurs 300 d'axe vertical tels que représentés sur la figure 7. Les ventilateurs 300 d'axe vertical sont montés à l'avant du chariot mobile 100. Un conduit d'acheminement 302 part de la sortie de chaque ventilateur 300, et forme déflecteur directement vers l'outil de retournement 200 et plus précisément vers lesdites paires d'aubes 202 qui font partie de l'outil de retournement.

L'air soufflé par les ventilateurs 300 coopère directement avec les paires d'aubes 202 pour favoriser un séchage rapide et ainsi économiser de l'énergie.

La figure 8 montre plus précisément une paire d'aubes 202 fixées sur l'arbre entraîné 210. Chaque paire d'aubes 202 est encadrée latéralement par des joues 208. Les deux aubes 204A et 204B sont asymétriques et ont des rayons distincts. L'écart de rayons entre chacune des deux aubes 204A et 204B est au moins égale à 5%.

Selon un mode de réalisation, une des deux aubes a un rayon compris entre 150 et 220 et préférentiellement entre 180 mm et 210 mm.

Selon un autre mode de réalisation une première aube a un rayon de 188 mm et une deuxième aube a un rayon de 203 mm. Dans ce mode de réalisation l'écart de rayon entre les deux aubes est d'environ 7,5%.

La figure 9 montre une coupe transversale de la paire d'aubes 202 selon l'axe de coupe A-A. Il apparaît une asymétrie de la paire d'aubes 202 du fait des rayons distincts respectivement de l'aube 204A et l'aube 204B.

L'arbre entraîné 210 peut être réalisé avec un tube cylindrique de diamètre environ égale à 220 mm et dont l'épaisseur extérieure de tôle est environ égale à 4 mm environ.

L'indépendance du système d'entraînement à chaînes 110 et particulièrement l'autonomie de chaque chaîne 110A et 110B en combinaison avec les aubes asymétriques est à l'origine d'une optimisation de coûts d'exploitation (continuité de production avec économie d'énergie notamment).

L'état de la technique utilise une seule chaîne pour entraîner un chariot. Cet entraînement connu pose un problème d'efficacité dans certains cas, tout particulièrement lors d'une rupture de chaîne, car il y a mise en arrêt immédiat du chariot et nécessité d'attendre le temps de la réparation. L'invention permet notamment d'éliminer cette étape de mise en arrêt lors de la rupture de la chaîne de guidage 110B, grâce à la continuation du fonctionnement de l'installation avec la chaîne 110A et l'outil de retournement. La réparation peut se faire ultérieurement.

Aussi, l'indépendance entre chaque arbre moteur permet un contrôle indépendant des éléments respectifs reliés audit arbre moteur. Par exemple, il peut s'avérer opportun d'accélérer la rotation des aubes indépendamment d'une accélération d'avancement du chariot. Ceci est réalisable avec l'invention.

La Demanderesse a découvert non sans surprise qu'une paire d'aubes asymétriques de rayons distincts d'au moins 5% représente un gain d'énergie considérable.

Selon un mode de réalisation, l'outil de retournement se compose d'une alternance de paires d'aubes 202 au nombre de six tel que représenté sur la figure 6. Dans d'autres modes de réalisation le nombre de paires d'aubes varie en fonction de la largeur du plancher. Chaque paire d'aubes a une largeur de tronçon (le long de l'arbre moteur) d'environ 1,5 m. Dans ce mode de réalisation l'aube 204A est de rayon inférieur à celui de l'aube 204B, le rayon de l'aube 204A étant d'environ 180 mm.

## Revendications

1. Installation de traitement de boues, du type comprenant
un plancher allongé possédant une surface de travail pour recevoir une masse de boues étalées,
des rails de guidage (102) sensiblement parallèles disposés longitudinalement sur le plancher, de part et d'autre de la surface de travail,
un système d'entraînement à chaînes (110) disposé le long des rails de guidage,
un chariot mobile (100) disposé transversalement au-dessus de la surface de travail et comprenant au moins une roue dentée engrenée sur le système d'entraînement à chaînes et couplée à un premier arbre moteur pour un déplacement du chariot mobile en translation longitudinale au dessus du plancher le long des rails,
le chariot portant un outil de retournement (200) rotatif positionné transversalement, au contact de ladite masse de boues, l'outil de retournement (200) étant entraîné en rotation par un second arbre moteur indépendant du premier,
**caractérisé en ce que**
l'outil de retournement (200) comprend des paires d'aubes demi-cylindriques fixées sensiblement symétriquement par l'un de leurs bords, de part et d'autre d'un arbre entraîné (210) par ledit second arbre moteur (206), les deux aubes (204 A ; 204 B) de chaque paire (202) étant asymétriques, du fait de rayons distincts, selon un écart au moins égal à 5% environ.

2. Installation selon la revendication 1, **caractérisée en ce qu'**elle comprend des ventilateurs (300) d'axe vertical montés à l'avant du chariot mobile (100), et un conduit d'acheminement (302) qui part de la sortie des ventilateurs, et forme déflecteur directement vers lesdites aubes de l'outil de retournement (200).

3. Installation selon l'une des revendications précédentes, dans laquelle ledit système d'entraînement à chaînes est disposé sensiblement horizontalement sur le plancher et parallèlement à chaque rail de guidage.

4. Installation selon l'une des revendications précédentes, dans laquelle ledit système d'entraînement à chaînes comprend une chaîne d'avancement (110A) et une chaîne de guidage (110B).

5. Installation selon l'une des revendications précédentes, dans laquelle un système de stabilisation (118) est disposé perpendiculairement à chaque rail de guidage.

6. Installation selon l'une des revendications précédentes, dans laquelle une poutre (112) en combinaison avec une roue (114) vient en appui horizontalement contre chaque rail de guidage (102).

7. Installation selon l'une des revendications précédentes, dans laquelle le plancher comprend un système de chauffage.

8. Installation selon l'une des revendications précédentes, dans laquelle l'arbre entraîné (210) comprend un tube cylindrique dont l'épaisseur de tôle est environ égale 4 mm.

9. Installation selon l'une des revendications précédentes, dans laquelle une des deux aubes a un rayon compris entre 150 mm et 220 mm.

10. Installation selon une des revendications 1 à 8, dans laquelle une première aube a un rayon de d'environ 180 mm et une deuxième aube a un rayon de d'environ 210 mm.

11. Installation selon une des revendications précédentes, dans laquelle le chariot mobile comprend un treillis de stabilisation formé par des barres d'armature.

## Patentansprüche

1. Anlage zur Behandlung von Schlämmen, vom Typ aufweisend
einen langgestreckten Boden mit einer Arbeitsfläche zur Aufnahme einer ausgebreiteten Schlammmasse;
im Wesentlichen parallele Führungsschienen (102), die auf dem Boden beiderseits der Arbeitsfläche längsverlaufend angeordnet sind;
ein Ketten-Mitnahmesystem (110), das entlang der Führungsschienen verläuft; und
einen verfahrbaren Wagen (100), der über der Arbeitsfläche quer angeordnet ist und mindestens ein Zahnrad aufweist, das im Eingriff mit dem Ketten-Mitnahmesystem steht und mit einer ersten Antriebswelle gekoppelt ist, um den verfahrbaren Wagen entlang den Schienen längs über den Boden zu verfahren;
wobei der Wagen ein rotierendes Wendewerkzeug (200) trägt, das in Berührung mit der Schlammmasse quer verläuft, wobei das Wendewerkzeug (200) in Drehung von einer zweiten, von der ersten unabhängigen Antriebswelle mitgenommen wird;
**dadurch gekennzeichnet, dass**
das Wendewerkzeug (200) Paare von halbzylindrischen Schaufeln aufweist, die im Wesentlichen symmetrisch mit einer ihrer Kanten beiderseits einer Welle (210) befestigt sind, die von der zweiten Antriebswelle (206) mitgenommen wird, wobei die beiden Schaufeln (204A; 204B) eines jeden Paares (202) asymmetrisch sind durch verschiedene Radien gemäß einem Unterschied von mindestens etwa 5%.

2. Anlage nach Anspruch 1, **dadurch gekennzeichnet, dass** sie Gebläse (300) mit vertikaler Achse, die vorne am verfahrbaren Wagen (100) angeordnet sind, und eine Förderleitung (302) aufweist, die vom Ablauf der Gebläse ausgeht und ein Ablenkelement bildet, das direkt zu den Schaufeln des Wendewerkzeugs (200) führt.

3. Anlage nach einem der vorgehenden Ansprüche, in der das genannte Ketten-Mitnahmesystem im Wesentlichen horizontal über den Boden und parallel zu jeder Führungsschiene verlaufend angeordnet ist.

4. Anlage nach einem der vorgehenden Ansprüche, in der das genannte Ketten-Mitnahmesystem eine Vorschubkette (110A) und eine Führungskette (110B) aufweist.

5. Anlage nach einem der vorgehenden Ansprüche, bei der senkrecht zu jeder Führungsschiene ein Stabilisierungssystem (118) rechtwinklig angeordnet ist.

6. Anlage nach einem der vorgehenden Patentansprüche, in der ein Trägerbalken (112) in Kombination mit einem Rad (114) horizontal abstützend an jeder Führungsschiene (102) anliegt.

7. Anlage nach einem der vorgehenden Ansprüche, bei der der Boden eine Heizung aufweist.

8. Anlage nach einem der vorgehenden Ansprüche, bei der die mitgenommene Welle (210) ein zylindrisches Rohr mit einer Blechdicke von etwa 4 mm aufweist.

9. Anlage nach einem der vorgehenden Ansprüche, bei der eine der beiden Schaufeln einen Radius zwischen 150 mm und 220 mm hat.

10. Anlage nach einem der Ansprüche 1 bis 8, in der eine erste Schaufel einen Radius von etwa 180 mm und eine zweite Schaufel einen Radius von etwa 210 mm aufweist.

11. Anlage nach einem der vorgehenden Ansprüche, bei der der verfahrbare Wagen ein Stabilisierungsgitter aufweist, das aus Bewehrungsstäben gebildet ist.

## Claims

1. Sludge treatment installation, of the type comprising
an elongated floor having a work surface for accommodating a mass of sludge spread out thereon,
substantially parallel guide rails (102) arranged longitudinally on the floor, on either side of the work surface,
a chain-type drive system (110) arranged along the guide rails,
a movable carriage (100) arranged transversely above the work surface and comprising at least one toothed wheel meshing with the chain-type drive system and coupled to a first drive shaft for moving the movable carriage in longitudinal translation above the floor along the rails,
the carriage carrying a rotary turning tool (200) positioned transversely, in contact with said mass of sludge, the turning tool (200) being driven in rotation by a second drive shaft independent of the first,
**characterised in that**
the turning tool (200) comprises pairs of semi-cylindrical paddles fixed substantially symmetrically by one of their edges, on either side of a shaft (210) driven by said second drive shaft (206), the two paddles (204A; 204B) of each pair (202) being asymmetrical, because of their different radii, with a difference of approximately at least 5%.

2. Installation according to claim 1, **characterised in that** it comprises fans (300) of vertical axis mounted on the front of the movable carriage (100), and a conveying duct (302) which starts from the outlet of the fans, and forms a deflector directly towards said paddles of the turning tool (200).

3. Installation according to one of the preceding claims, wherein the chain-type drive system is disposed substantially horizontally on the floor and parallel to each guide rail.

4. Installation according to one of the preceding claims, wherein the chain-type drive system comprises an advancing chain (110A) and a guide chain (110B).

5. Installation according to one of the preceding claims, wherein a stabilising system (118) is arranged perpendicularly with respect to each guide rail.

6. Installation according to one of the preceding claims, wherein a beam (112) combined with a wheel (114) bears horizontally against each guide rail (102).

7. Installation according to one of the preceding claims, wherein the floor comprises a heating system.

8. Installation according to one of the preceding claims, wherein the driven shaft (210) comprises a cylindrical tube having a sheet metal thickness of approximately equal to 4 mm.

9. Installation according to one of the preceding claims, wherein one of the two paddles has a radius of between 150 and 220 mm.

10. Installation according to one of claims 1 to 8, wherein a first paddle has a radius of about 180 mm and a second paddle has a radius of about 210 mm.

11. Installation according to one of the preceding claims, wherein the movable carriage comprises a stabilising lattice formed by reinforcing bars.
